# EUROPEAN PATENT APPLICATION

(11) **EP 2 732 932 A2**
(43) Date of publication of application: **21.05.2014**
(21) Application number: 13190615.8
(22) Date of filing: 29.10.2013
(51) Int. Cl.: B25J 9/16

(54) **Robot system**

(30) Priority: 19.11.2012 JP 2012253492
(71) Applicant: Kabushiki Kaisha Yaskawa Denki, Kitakyushu-shi, Fukuoka 806-0004 (JP)
(72) Inventor: Iruma, Daisuke, Kitakyushu-shi, Fukuoka 806-0004 (JP); Minami, Yusuke, Kitakyushu-shi, Fukuoka 806-0004 (JP)
(74) Representative: Viering, Jentschura & Partner Patent- und Rechtsanwälte

(57) **Abstract**

A robot system includes a robot having a plurality of joints; and a plurality of actuators configured to drive the plurality of joints, respectively. At a tip end of the robot, a hand is provided such that the hand is rotatable about a first rotation axis by one of the actuators and holds a workpiece in a position vertically offset with respect to the first rotation axis. Further, the robot system includes a controller configured to control the plurality of actuators such that the hand rotates about a second rotation axis positioned closer to the workpiece than the first rotation axis and parallel to the first rotation axis.

## Description

### BACKGROUND OF THE INVENTION

### Field of the Invention

An embodiment disclosed herein relates to a robot system.

### Background of the Invention

Japanese Patent Application Publication H11-199052 discloses a palletizing device designed to place and stack commodity-packing cardboard boxes on a pallet one above another. The palletizing device includes a grip unit for interposing and gripping a cardboard box and a rotatable arm provided with the grip unit in the tip end portion thereof.

When automating a palletizing work, it is required from the viewpoint of economy that a tact time be made as short as possible. To this end, there is a need to transfer a workpiece at a high speed.

The conventional palletizing device cited above grips a cardboard box with the grip unit and transfers the cardboard box by rotating the arm. In this palletizing device, the higher the transfer speed, the larger the load applied to the workpiece by a centrifugal force or the like. For that reason, if the workpiece is easily deformable or if the content of the workpiece is delicate, there is a limit in performing a palletizing work at a high speed. This becomes problem in the automation of the palletizing work.

### SUMMARY OF THE INVENTION

In view of the above, an embodiment disclosed herein provides a robot system capable of enabling a high-speed unloading work while reducing a load applied to a workpiece.

In accordance with an aspect of the disclosure, there is provided a robot system which includes: a robot having a plurality of joints; a plurality of actuators configured to drive the plurality of joints, respectively; a hand provided at a tip end of the robot, the hand being rotatable about a first rotation axis by one of the actuators and configured to hold a workpiece in a position vertically offset with respect to the first rotation axis; and a controller configured to control the plurality of actuators such that the hand rotates about a second rotation axis positioned closer to the workpiece than the first rotation axis and parallel to the first rotation axis.

According to the robot system of the embodiment disclosed herein, a high-speed unloading work can be performed while reducing a load applied to a workpiece.

### BRIEF DESCRIPTION OF THE DRAWINGS

Fig. 1 is a right side view schematically showing the overall configuration of a robot system according to an embodiment.
Fig. 2 is a plan view schematically showing the overall configuration of the robot system.
Fig. 3 is a front view schematically showing the configuration of a hand.
Fig. 4 is a plan view schematically showing the configuration of the hand.
Fig. 5A is a side view seen in the direction of the arrow B in Fig. 4, and Fig. 5B is a side view seen in the direction of the arrow C in Fig. 4.
Fig. 6 is a block diagram showing the configuration of a controller.
Fig. 7 is a block diagram showing the functional configuration of a motor control device provided in a corresponding relationship with a servo motor for driving a claw member.
Figs. 8 to 17 are schematic views for explaining the operations of the robot and the hand performed under the control of the controller.
Fig. 18 is a block diagram showing the configuration of a controller in a modified example in which the rotation center position of the hand is set depending on the
dimension of a cardboard box.

### DESCRIPTION OF THE EMBODIMENTS

An embodiment of a robot system will now be described with reference to the accompanying drawings. If annotations "front", "rear", "left", "right", "upper" and "lower" exist in the drawings, the terms "front", "rear", "left", "right", "upper" and "lower" used in the description of the subject specification indicate the directions designated by the annotations. Herein, "front-rear", "left-right" and "upper-lower" directions are orthogonal to each other.

### <Robot System>

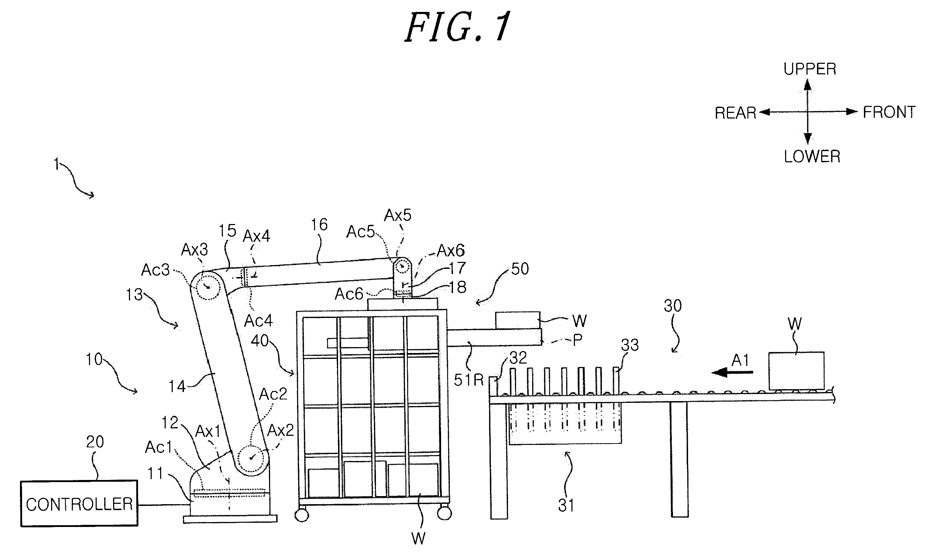

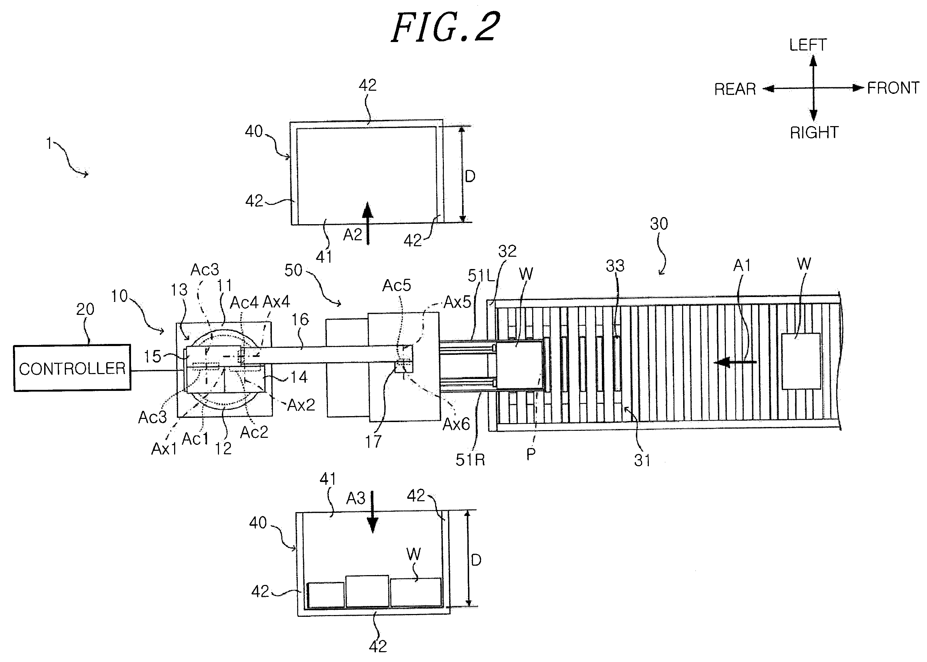

Referring first to Figs. 1 and 2, description will be made on the overall configuration of a robot system according to the present embodiment.

As shown in Figs. 1 and 2, the robot system 1 according to the present embodiment includes a conveyor 30, a robot 10, a controller 20 and a hand 50.

The conveyor 30 conveys a plurality of cardboard boxes (workpieces) W one after another along a predetermined conveyance route (see an arrow A1 in Figs. 1 and 2). The cardboard boxes W conveyed by the conveyor 30 have flexibility and differ in dimension and content from one another. The dimension information indicating the dimensions of the cardboard boxes W conveyed by the conveyor 30 (the information indicating the width, the depth and the height of the cardboard boxes W) is inputted to the controller 20.

The conveyor 30 includes a lift device 31 arranged at the downstream side of the conveyance route. The lift device 31 includes a protrusion 32 and a plurality of elevator portions 33.

The protrusion 32 is arranged at the downstream side of the conveyance route to protrude upward. If the cardboard boxes W conveyed by the conveyor 30 reach a holding position where the cardboard boxes W are held by a pair of claw members 51L and 51R to be described later, the cardboard boxes W collide with the protrusion 32 and stop in the holding position.

The respective elevator portions 33 are moved up and down in synchronization with one another by a suitable drive device not shown. More specifically, as a result of the synchronous up/down movement, the respective elevator portions 33 can be switched to a lower position (indicated by double-dot chain lines in Fig. 1) in which the upper ends of the elevator portions 33 are positioned lower than the conveyance surface of the conveyor 30 and an upper position (indicated by solid lines in Fig. 1) in which the upper ends of the elevator portions 33 are positioned higher than the upper end of the protrusion 32.

The lift device 31 keeps the respective elevator portions 33 in the lower position until the cardboard box W is conveyed to the holding position and collided with the protrusion 32. If the conveyance of the cardboard box W is stopped in the holding position after the cardboard box W is conveyed to the holding position and collided with the protrusion 32, the respective elevator portions 33 are switched to the upper position. Thus, the lift device 31 can lift up, using the elevator portions 33, the cardboard box W stopped in the holding position by the protrusion 32.

The robot 10 includes a base block 11, a rotator 12 and an arm 13.

The base block 11 is fixed upright to an installation portion (a floor portion not shown, in the illustrated example) by anchor bolts not shown. Alternatively, the base block 11 may be fixed to a portion other than the floor portion (e.g., a ceiling portion or a wall portion not shown).

The rotator 12 is connected to the upper end portion of the base block 11 to rotate about a rotation axis Ax1 substantially perpendicular to the fixing surface (the bottom portion in the illustrated example) of the base block 11. By the operation of an actuator Ac1 provided in (or adjacent to) a joint between the rotator 12 and the base block 11, the rotator 12 is rotationally driven about the rotation axis Ax1 with respect to the upper end portion of the base block 11.

The arm 13 includes a first structure 14, a second structure 15, a third structure 16, a fourth structure 17 and a fifth structure 18, which are arranged from the base end side (the side of the rotator 12) to the opposite tip end side.

The first structure 14 is connected to the upper end portion of the rotator 12 to rotate about a rotation axis Ax2 substantially perpendicular to the rotation axis Ax1. By the operation of an actuator Ac2 provided in (or adjacent to) a joint between the first structure 14 and the rotator 12, the first structure 14 is rotationally driven about the rotation axis Ax2 with respect to the upper end portion of the rotator 12.

The second structure 15 is connected to the tip end portion of the first structure 14 to rotate about a rotation axis Ax3 substantially parallel to the rotation axis Ax2. By the operation of an actuator Ac3 provided in (or adjacent to) a joint between the second structure 15 and the first structure 14, the second structure 15 is rotationally driven about the rotation axis Ax3 with respect to the tip end portion of the first structure 14.

The third structure 16 is connected to the tip end portion of the second structure 15 to rotate about a rotation axis Ax4 substantially perpendicular to the rotation axis Ax3. By the operation of an actuator Ac4 provided in (or adjacent to) a joint between the third structure 16 and the second structure 15, the third structure 16 is rotationally driven about the rotation axis Ax4 with respect to the tip end portion of the second structure 15.

The fourth structure 17 is connected to the tip end portion of the third structure 16 to rotate about a rotation axis Ax5 substantially perpendicular to the rotation axis Ax4. By the operation of an actuator Ac5 provided in (or adjacent to) a joint between the fourth structure 17 and the third structure 16, the fourth structure 17 is rotationally driven about the rotation axis Ax5 with respect to the tip end portion of the third structure 16.

The fifth structure 18 is connected to the tip end portion of the fourth structure 17 to rotate about a rotation axis Ax6 (a first rotation axis) substantially perpendicular to the rotation axis Ax5. By the operation of an actuator Ac6 provided in (or adjacent to) a joint between the fifth structure 18 and the fourth structure 17, the fifth structure 18 is rotationally driven about the rotation axis Ax6 with respect to the tip end portion of the fourth structure 17.

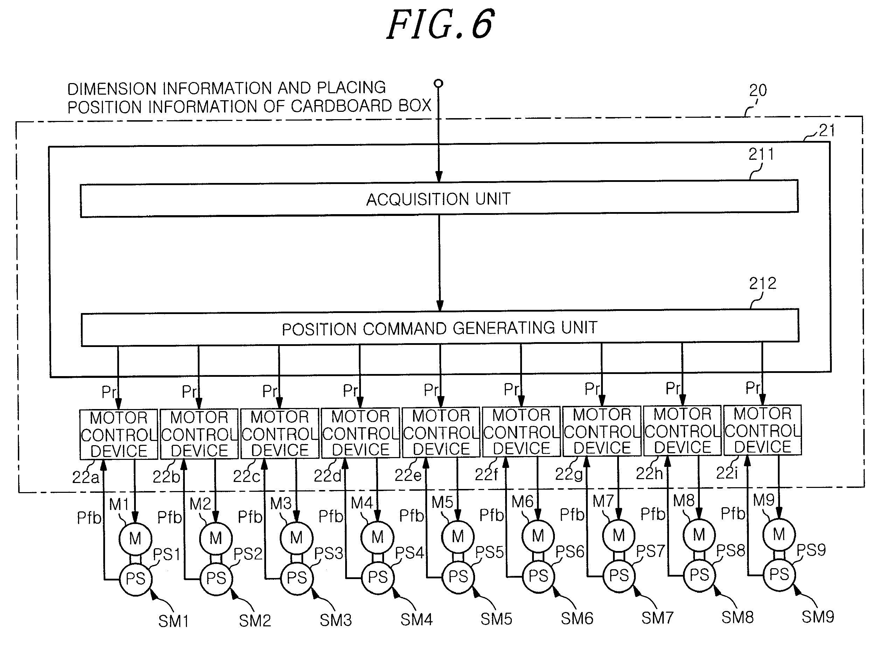

Servo motors SM1, SM2, SM3, SM4, SM5 and SM6 (see Fig. 6 to be described later) are respectively included in the actuators Ac1 to Ac6 provided in the robot 10. Motors M1, M2, M3, M4, M5 and M6 and position detectors PS1, PS2, PS3, PS4, PS5 and PS6 (see Fig. 6 to be described later) are respectively included in the servo motors SM1 to SM6. The rotation position information indicating the rotation positions of the respective motors M1 to M6, as signals generated from the respective position detectors PS1 to PS6, is outputted to the controller 20 at every predetermined calculation period.

The hand 50 is attached to the tip end portion of the fifth structure 18 (namely, the tip end portion of the robot 10). The hand 50 is rotated about the rotation axis Ax6 by the rotational operation of the fifth structure 18 about the rotation axis Ax6, which is caused by the actuator Ac6. The hand 50 can hold the cardboard box W in a position vertically offset with respect to the rotation axis Ax6 (hereinafter sometimes referred to as "offset position").

In other words, the hand 50 is provided with a pair of claw members (holding members) 51L and 51R for holding and releasing the cardboard box W in the offset position. In the present embodiment, the middle position between the tip ends of the claw members 51L and 51R is set as a control point P used in controlling the position of the hand 50. Alternatively, the control point P may be set in other positions. The hand 50 and the claw members 51L and 51R provided in the hand 50 will be described later in more detail.

The robot 10 configured as above performs a palletizing work as one kind of unloading works. The robot 10 holds the cardboard box W, which is conveyed to the holding position by the conveyor 30, stopped in the holding position and lifted up by the lift device 31, in the offset position with the claw members 51L and 51R of the hand 50 (the details of which will be described later). Further, the robot 10 transfers the cardboard box W held by the claw members 51L and 51R of the hand 50 to a placing position designated by the controller 20. Then, the cardboard box W is released and placed in the placing position (the details of which will be described later).

The controller 20 includes at least one computer having, e.g., an arithmetic unit, a storage unit and an input unit. The controller 20 controls the operation of the robot 10 (specifically, the rotator 12 and the first to fifth structures 14 to 18 of the arm 13) by driving the actuators Ac1 to AC6 provided in the robot 10. Further, the controller 20 controls the operation of the hand 50 (specifically, the claw members 51L and 51R and pushers 56L and 56R to be described later) by driving the below-mentioned servo motors SM7, SM8 and SM9 provided in the hand 50. The configuration and function of the controller 20 and the operations of the robot 10 and the hand 50 controlled by the controller 20 will be described later in more detail.

In the robot system 1, there are provided two cargos (transport containers) 40 on which the cardboard box W released by the claw members 51L and 51R of the hand 50 is placed. Each of the cargos 40 includes a bottom plate 41 and sidewalls 42 arranged at three sides around the bottom plate 41. The respective cargos 40 are arranged in such positions that require the hand 50 to make a rotating operation with respect to the holding position (the positions existing at the left rear side and the right rear side of the holding position).

In other words, the respective cargos 40 (namely, the placing positions of the cardboard box W) and the holding position are in a positional relationship that requires the rotating operation of the hand 50. The cargos 40 may be arranged in the positions other than the positions existing at the left rear side and the right rear side of the holding position, namely in the positions other than the positions that require the hand 50 to make a rotating operation with respect to the holding position.

The claw members 51L and 51R of the hand 50 of the robot 10 can gain access to the respective cargos 40 configured and arranged in this manner, only in the front-rear direction (the direction perpendicular to the workpiece conveyance direction of the conveyor 30). More specifically, the claw members 51L and 51R of the hand 50 of the robot 10 can gain access to the cargo 40 arranged at the left rear side of the holding position, only in the left direction (in the direction of an arrow A2 in Fig. 2). Likewise, the claw members 51L and 51R of the hand 50 of the robot 10 can gain access to the cargo 40 arranged at the right rear side of the holding position, only in the right direction (in the direction of an arrow A3 in Fig. 2).

### <Hand>

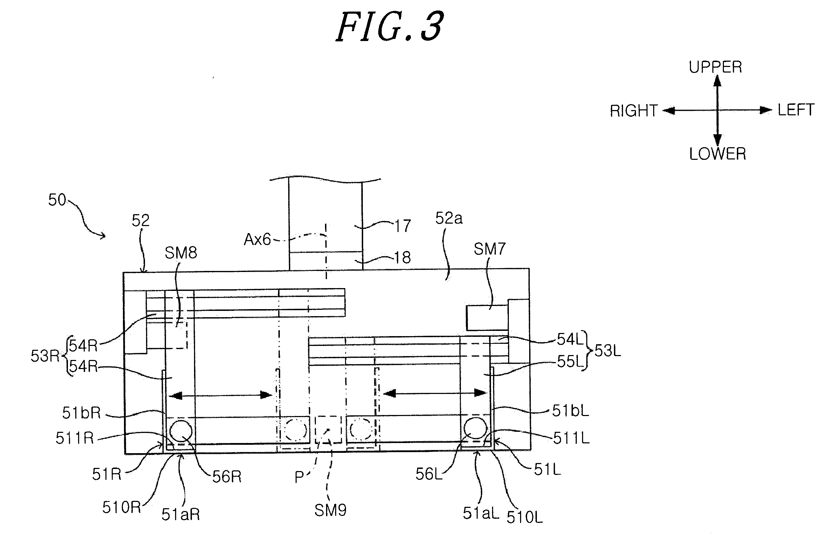

Next, the configuration of the hand 50 will be described with reference to Figs. 3 to 5.

As shown in Figs. 3 to 5, the hand 50 includes a housing 52 having a substantially rectangular parallelepiped shape and two slide mechanisms 53L and 53R.

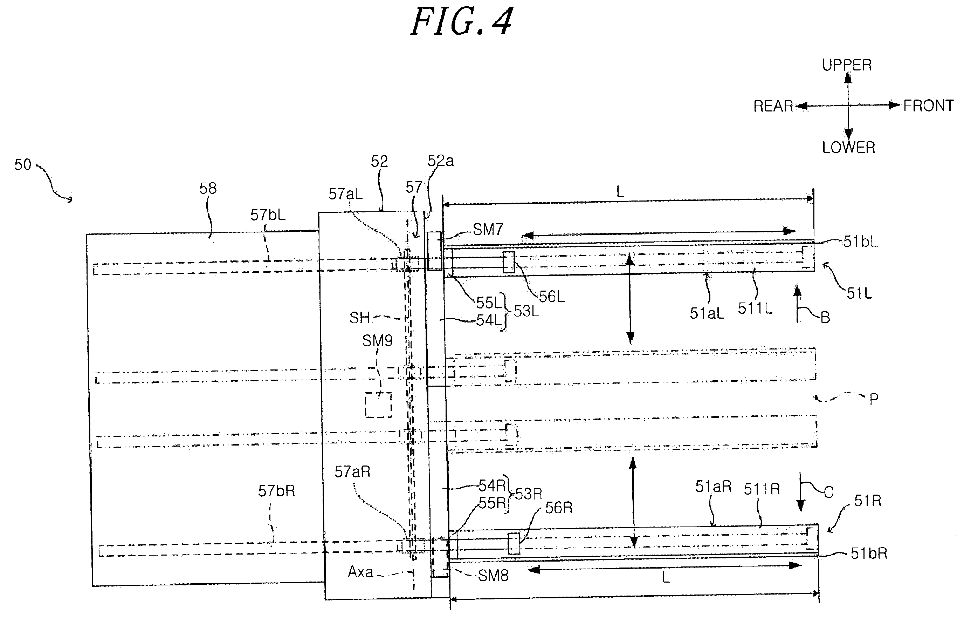

The housing 52 is fixed to the tip end portion of the fifth structure 18. Responsive to the rotation of the fifth structure 18 about the rotation axis Ax6, the housing 52 rotates about the rotation axis Ax6. In the following description, the width direction of the housing 52 substantially perpendicular to the rotation axis Ax6 (the left-right direction in Fig. 3) will be sometimes referred to as "hand width direction". Furthermore, in the following description, the depth direction of the housing 52 substantially perpendicular to the rotation axis Ax6 (the front-rear direction in Fig. 4) will be referred to as "hand depth direction".

The slide mechanisms 53L and 53R are respectively arranged at one side of the hand width direction (the left side in Fig. 3) and at the other side of the hand width direction (the right side in Fig. 3) on the surface 52a (hereinafter sometimes referred to as "front surface 52a") of the housing 52 existing at one end of the hand depth direction (at the front side in Fig. 4).

The slide mechanism 53L includes a guide rail 54L and a slider 55L.

The guide rail 54L is fixed to the front surface 52a of the housing 52 at one side of the hand width direction to extend in the hand width direction.

The slider 55L engages with the guide rail 54L so that the slider 55L can move in the hand width direction. The slider 55L is moved along the guide rail 54L by the operation of a servo motor SM7 arranged on the front surface 52a of the housing 52 at one side of the hand width direction.

A motor M7 and a position detector PS7 (see Fig. 6 to be described later) are included in the servo motor SM7. The rotation position information of the motor M7, as a signal generated from the position detector PS7, is outputted to the controller 20 at every predetermined calculation period.

The claw member 51L is fixed to the slider 55L. The claw member 51L is moved in the hand width direction as the slider 55L is moved along the guide rail 54L by the operation of the servo motor SM7. The claw member 51L extends longer than the depth of each of the cargos 40 in the plane direction substantially perpendicular to the rotation axis Ax6 (the hand depth direction in the illustrated example). In other words, the longitudinal dimension L of the claw member 51L is larger than the depth direction dimension D of each of the cargos 40 (see Fig. 2).

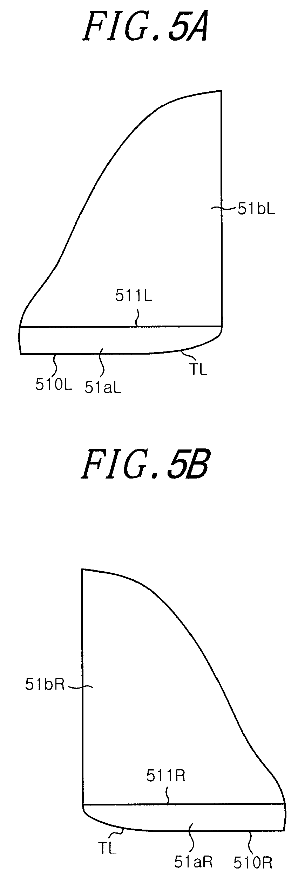

The claw member 51L includes a bottom plate 51aL and a side plate 51bL formed at a predetermined angle (at a substantially right angle in the illustrated example) with respect to the bottom plate 51aL. On the surface 510L (hereinafter sometimes referred to as "lower surface 510L") of the tip end of the bottom plate 51aL at one side of the direction of the rotation axis Ax6 (at the lower side in Fig. 3), there is provided a taper portion TL such that the tip end of the bottom plate 51aL has a sharp shape (see Fig. 5A).

In the slide mechanism 53L, if the servo motor SM7 is driven, the drive force thereof is transmitted to the slider 55L via a suitable power transmission mechanism (e.g., a power transmission mechanism including a ball screw) not shown. Thus, the slider 55L is moved along the guide rail 54L. As a result, the claw member 51L is moved in the hand width direction due to the movement of the slider 55L along the guide rail 54L.

In the meantime, the slide mechanism 53R includes a guide rail 54R and a slider 55R.

The guide rail 54R is fixed to the front surface 52a of the housing 52 at the other side of the hand width direction to extend in the hand width direction.

The slider 55R engages with the guide rail 54R so that the slider 55R can move in the hand width direction. The slider 55R is moved along the guide rail 54R by the operation of a servo motor SM8 arranged on the front surface 52a of the housing 52 at the other side of the hand width direction.

A motor M8 and a position detector PS8 (see Fig. 6 to be described later) are included in the servo motor SM8. The rotation position information of the motor M8, as a signal generated from the position detector PS8, is outputted to the controller 20 at every predetermined calculation period.

The claw member 51R symmetrical in the hand width direction with the claw member 51L fixed to the slider 55L is fixed to the slider 55R. The claw member 51R is moved in the hand width direction as the slider 55R is moved along the guide rail 54R by the operation of the servo motor SM8. The claw member 51R extends longer than the depth of each of the cargos 40 in the plane direction substantially perpendicular to the rotation axis Ax6 (the hand depth direction in the illustrated example). In other words, the longitudinal dimension L of the claw member 51R is larger than the depth direction dimension D of each of the cargos 40 (see Fig. 2).

The claw member 51R includes a bottom plate 51aR and a side plate 51bR formed at a predetermined angle (at a substantially right angle in the illustrated example) with respect to the bottom plate 51aR and arranged so as to face the side plate 51bL of the claw member 51L in the hand width direction. On the surface 510R (hereinafter sometimes referred to as "lower surface 510R") of the tip end of the bottom plate 51aR at one side of the direction of the rotation axis Ax6, there is provided a taper portion TR tapering such that the tip end of the bottom plate 51aR has a sharp shape (see Fig. 5B).

In the slide mechanism 53R, if the servo motor SM8 is driven, the drive force thereof is transmitted to the slider 55R via a suitable power transmission mechanism (e.g., a power transmission mechanism including a ball screw) not shown. Thus, the slider 55R is moved along the guide rail 54R. As a result, the claw member 51R is moved in the hand width direction due to the movement of the slider 55R along the guide rail 54R.

Since the claw members 51L and 51R are moved in the hand width direction in the aforementioned manner, it is possible for the claw members 51L and 51R to hold and release the cardboard box W. In other words, the claw members 51L and 51R move toward each other (toward the center in the hand width direction). Thus, the cardboard box W stopped in the holding position and lifted up in the aforementioned manner is placed on the surfaces 511L and 511R (hereinafter sometimes referred to as "upper surfaces 511L and 511R") of the bottom plates 51aL and 51aR existing at the other side of the direction of the rotation axis Ax6 (at the upper side in Fig. 3) and is interposed between the side plates 51bL and 51bR.

It is therefore possible for the claw members 51L and 51R to hold the cardboard box W in the offset position. If one of the claw members 51L and 51R holding the cardboard box W (e.g., the claw member 51L) is kept fixed and if the other (e.g., the claw member 51R) is moved away from the center in the hand width direction, it is possible to release the cardboard box W.

Within the housing 52, there are arranged a servo motor SM9, a shaft SH capable of rotating about a rotation axis Axa extending substantially in the hand width direction and a rack and pinion mechanism 57.

A motor M9 and a position detector PS9 (see Fig. 6 to be described later) are included in the servo motor SM9. The rotation position information of the motor M9, as a signal generated from the position detector PS9, is outputted to the controller 20 at every predetermined calculation period.

The shaft SH is connected to an output shaft of the motor M9 not shown through a suitable gear mechanism not shown. Thus, the shaft SH is rotationally driven about the rotation axis Axa by driving the servo motor SM9.

The rack and pinion mechanism 57 includes two pinion gears 57aL and 57aR and two rack gears 57bL and 57bR.

The pinion gears 57aL and 57aR are respectively fixed to one and the other ends of the shaft SH in the hand width direction to rotate about the rotation axis Axa. If the shaft SH is rotated about the rotation axis Axa by driving the servo motor SM9, the pinion gears 57aL and 57aR rotate about the rotation axis Axa in synchronization with each other.

The rack gears 57bL and 57bR extend in the hand depth direction at one and the other sides of the hand width direction and mesh with the pinion gears 57aL and 57aR so as to move in the hand depth direction. The rack gears 57bL and 57bR follow the rotation of the pinion gears 57aL and 57aR about the rotation axis Axa and move in the hand depth direction in synchronization with each other. At the other side of the housing 52 in the hand depth direction (at the rear side in Fig. 4), there is provided a cover 58 for covering the rack gears 57bL and 57bR at the other end of the hand depth direction.

Pushers 56L and 56R are respectively connected to one ends of the rack gears 57bL and 57bR in the hand depth direction. If the rack gears 57bL and 57bR are moved in the hand depth direction by driving the servo motor SM9, the pushers 56L and 56R are moved in the hand depth direction in synchronization with each other.

In the rack and pinion mechanism 57, if the servo motor SM9 is driven, the drive force thereof is transmitted to the shaft SH via a suitable gear mechanism. Accordingly, the shaft SH rotates about the rotation axis Axa, at which time the pinion gears 57aL and 57aR rotate about the rotation axis Axa in synchronization with each other. As a result, the rack gears 57bL and 57bR follow the synchronous rotation of the pinion gears 57aL and 57aR about the rotation axis Axa and move in the hand depth direction in synchronization with each other. Along with the synchronous movement of the rack gears 57bL and 57bR in the hand depth direction, the pushers 56L and 56R are moved in the hand depth direction in synchronization with each other.

Since the pushers 56L and 56R are moved in the hand depth direction in synchronization with each other as mentioned above, it becomes possible to relatively move the cardboard box W placed on the bottom plates 51aL and 51aR of the claw members 51L and 51R, with respect to the claw members 51L and 51R.

### <Controller>

Next, the configuration and function of the controller 20 will be described with reference to Fig. 6.

As shown in Fig. 6, the controller 20 includes an upper control device 21 and motor control devices 22a, 22b, 22c, 22d, 22e, 22f, 22g, 22h and 22i provided in a corresponding relationship with the servo motors SM1 to SM9.

The upper control device 21 is formed of a computer, e.g., a general-purpose personal computer, a programmable logic controller (PLC) or a motion controller. The upper control device 21 includes an acquisition unit 211 and a position command generating unit 212.

The acquisition unit 211 acquires the dimension information and the placing position information (the coordinates of a placing position) of the cardboard box W to be held by the claw members 51L and 51R of the hand 50, from an external device not shown (or a memory provided in the upper control device 21).

The position command generating unit 212 generates position commands Pr relating to the motors M1 to M9, based on the dimension information and the placing position information of the cardboard box W acquired by the acquisition unit 211. The position commands Pr relating to the motors M1 to M9 thus generated are outputted to the corresponding motor control devices 22a to 22i, thereby controlling the rotational positions of the corresponding motors M1 to M9.

The motor control devices 22a to 22i control the rotational operations of the corresponding motors M1 to M9, based on the position commands Pr inputted from the upper control device 21 and the motor position information Pfb indicating the rotational positions of the corresponding motors M1 to M9, which is inputted from the corresponding position detectors PS1 to PS9.

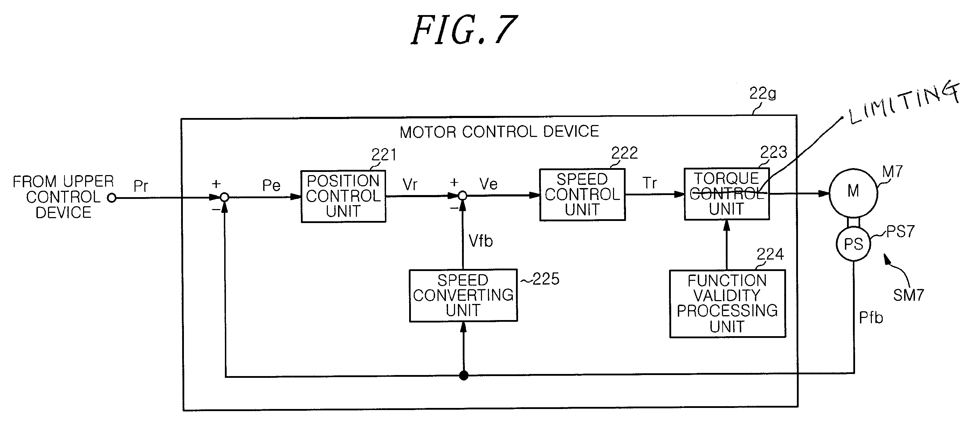

Next, the functional configuration of the motor control device 22g will be described with reference to Fig. 7.

As shown in Fig. 7, the motor control device 22g includes a position control unit 221, a speed converting unit 225, a speed control unit 222, a torque limiting unit 223 and a function validity processing unit 224.

Based on a position deviation Pe between the position command Pr inputted from the upper control device 21 and the motor position information Pfb fed-back from the position detector PS7, the position control unit 221 outputs a speed command Vr to the speed control unit 222 so as to reduce the position deviation Pe. Thus, the position control unit 221 performs position control on the servo motor SM7, thereby controlling the movement position of the claw member 51L.

Based on a change in the motor position information Pfb fed-back from the position detector PS7, the speed converting unit 225 calculates motor speed information Vfb indicating the rotation speed of the motor M7. The speed converting unit 225 outputs the motor speed information Vfb to the speed control unit 222. A differentiator may be used as the speed converting unit 225.

Based on a speed deviation Ve between the speed command Vr inputted from the position control unit 221 and the motor speed information Vfb inputted from the speed converting unit 225, the speed control unit 222 outputs a torque command Tr to the torque limiting unit 223 so as to reduce the speed deviation Ve. Thus, the speed control unit 222 performs the speed control on the servo motor SM7, thereby controlling the movement speed of the claw member 51L.

The torque limiting unit 223 has a function (torque limiting function) of limiting an instruction torque pursuant to the torque command Tr inputted from the speed control unit 222 (hereinafter sometimes referred to as "command torque") to a predetermined torque limiting value or smaller. The torque limiting unit 223 outputs a drive current to the motor M7 under, e.g., PWM control. The torque limiting value is a parameter and is set to an arbitrary value.

Depending on the position of the claw member 51L, the validity and invalidity of the torque limiting function of the torque limiting unit 223 is switched by the function validity processing unit 224. In case where the torque limiting function is valid, if the command torque Tr becomes equal to or larger than the torque limiting value, the torque limiting unit 223 actually performs a torque limiting operation. If the command torque Tr becomes smaller than the torque limiting value, the torque limiting unit 223 does not perform the torque limiting operation.

The functional configuration of the motor control device 22h is the same as the functional configuration of the motor control device 22g, except that the description on the servo motor SM7 (the motor M7 and the position detector PS7) and the claw member 51L is replaced by the description on the servo motor SM8 (the motor M8 and the position detector PS8) and the claw member 51R.

Therefore, the functional configuration of the motor control device 22h will not be shown and described. In the following description, the respective units (the position control unit, the speed converting unit, the speed control unit, the torque limiting unit and the function validity processing unit) of the motor control device 22h will be designated by the same reference symbols as the reference symbols designating the corresponding units of the motor control device 22g.

The functional configuration of the motor control device 22i is the same as the functional configuration of the motor control device 22g, except that the torque limiting unit 223 and the function validity processing unit 224 are omitted and that the description on the servo motor SM7 (the motor M7 and the position detector PS7) and the claw member 51L is replaced by the description on the servo motor SM9 (the motor M9 and the position detector PS9) and the pushers 56L and 56R. Therefore, the functional configuration of the motor control device 22i will not be shown and described.

In the following description, the respective units (the position control unit, the speed converting unit and the speed control unit) of the motor control device 22i will be designated by the same reference symbols as the reference symbols designating the corresponding units of the motor control device 22g. Based on a speed deviation Ve between the speed command Vr inputted from the position control unit 221 and the motor speed information Vfb inputted from the speed converting unit 225, the speed control unit 222 of the motor control device 22i outputs e.g., a PWM-controlled drive current pursuant to the torque command Tr, to the motor M9 so as to reduce the speed deviation Ve.

### <One Example of Operation of Robot and Hand>

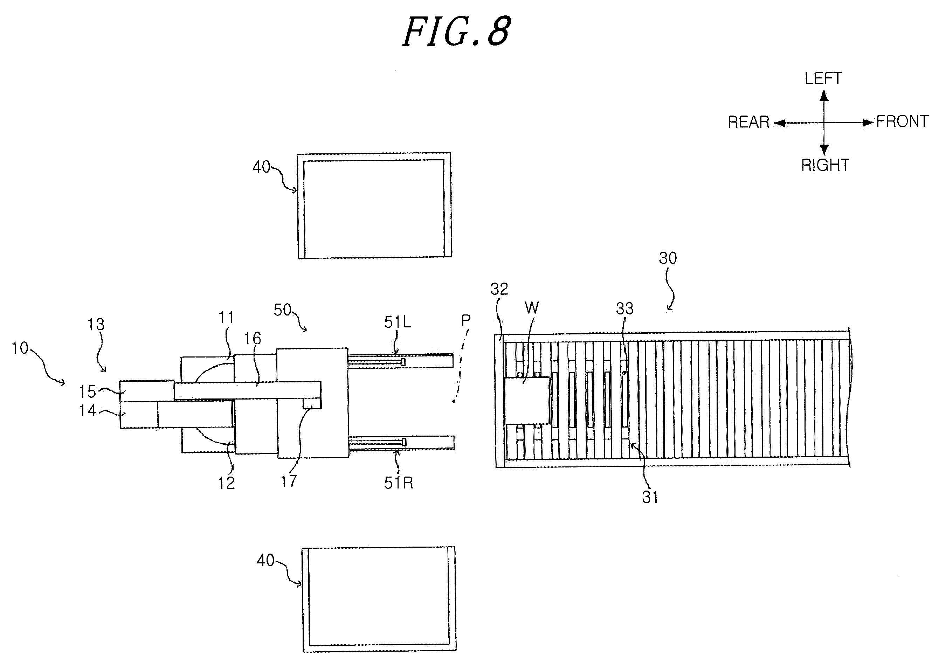

Next, one example of the operations of the robot 10 and the hand 50 performed under the control of the controller 20 will be described with reference to Figs. 8 through 17. In Figs. 8 through 17, the operations of the robot 10 and the hand 50 performed under the control of the controller 20 are illustrated in chronological order.

As shown in Fig. 8, the cardboard box W conveyed by the conveyor 30 is stopped in the holding position by the protrusion 32 of the lift device 31 and is lifted up by the elevator portions 33.

Then, pursuant to the position commands Pr supplied from the upper control device 21, the motor control devices 22a to 22f perform position control on the servo motors SM1 to SM6. Accordingly, the hand 50 moves to a first designated position.

The first designated position refers to a position where the control point P exists in one depth direction end portion (the front end portion in Fig. 8) of the cardboard box W positioned in the holding position, in the substantially central portion of the cardboard box W in the width direction (in the left-right direction in Fig. 8) and in one height direction end portion (the lower end portion at the side of the conveyance surface of the conveyor 30 in Fig. 8) of the cardboard box W. In other words, the first designated position is a position where the claw members 51L and 51R are located at the width direction opposite sides of the cardboard box W positioned in the holding position.

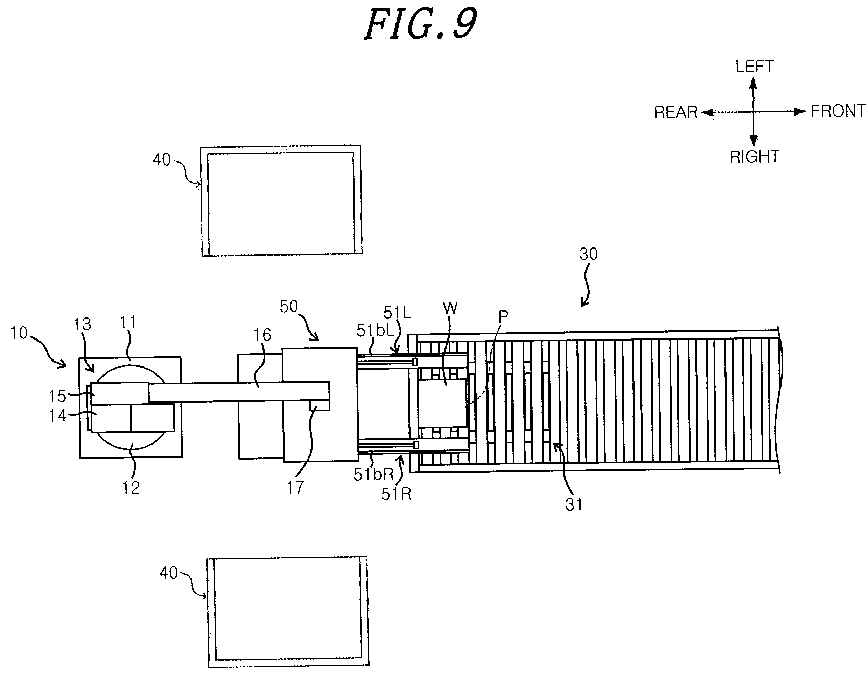

Next, the rotator 12 and the first to fifth structures 14 to 18 of the arm 13 are appropriately driven, and the robot 10 moves the hand 50 to the first designated position as shown in Fig. 9.

If the hand 50 is moved to the first designated position, the position control units 221 and 221 of the motor control devices 22g and 22h perform position control on the servo motors SM7 and SM8 based on the position commands Pr supplied from the upper control device 21, so that the claw members 51L and 51R can move to first positions decided by the dimension information of the cardboard box W.

The first positions refer to positions where the respective side plates 51bL and 51bR are just prior to making contact with one width direction side surface (the left surface in Fig. 9) and the other width direction side surface (the right surface in Fig. 9) of the cardboard box W positioned in the holding position.

The speed control units 222 of the motor control devices 22g and 22h perform speed control operations on the servo motors SM7 and SM8 based on the speed command Vr supplied from the position control units 221 and 221, so that the claw members 51L and 51R can move to the first positions at a first speed which is relatively high speed.

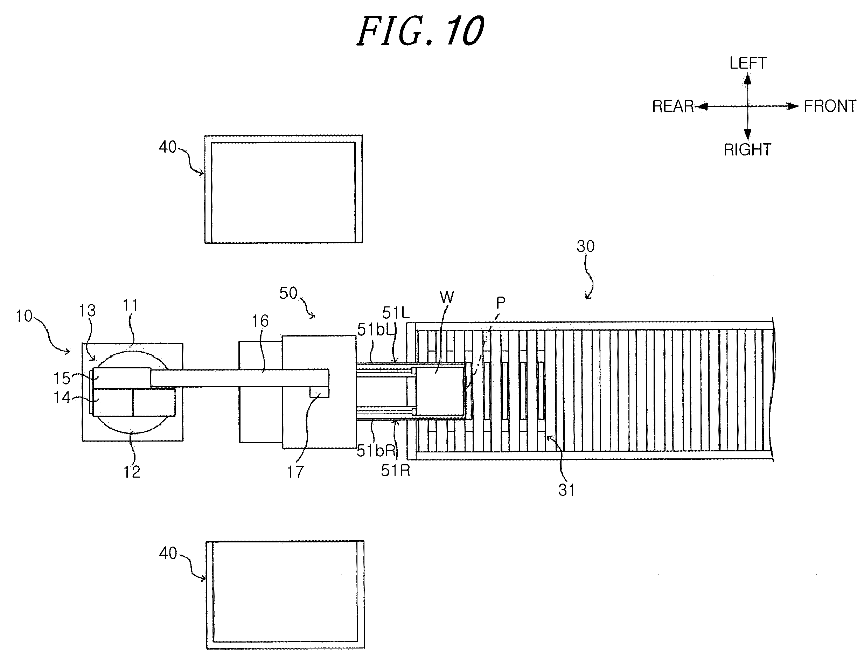

Thus, as shown in Fig. 10, the claw members 51L and 51R are driven toward each other at the first speed and are moved to the first positions.

When the claw members 51L and 51R are moved to the first positions, the function validity processing units 224 of the motor control devices 22g and 22h make valid the torque limiting function performed by the torque limiting units 223. As a result, the torque limiting units 223 begin to perform the torque limiting operations.

Meanwhile, the position control units 221 of the motor control devices 22g and 22h perform position control on the servo motors SM7 and SM8 based on the position commands Pr supplied from the upper control device 21, so that the claw members 51L and 51R can move from the first positions to second positions.

The second positions refer to positions where the side plates 51bL and 51bR are located closer to the width direction center than one width direction side surface and the other width direction side surface of the cardboard box W positioned in the holding position (positions existing nearer to the width direction center as far as possible, in the illustrated example).

Concurrently, the speed control units 222 of the motor control devices 22g and 22h perform speed control operations on the servo motors SM7 and SM8 based on the speed command Vr supplied from the position control units 221 and 221, so that the claw members 51L and 51R can move from the first positions to the second positions at a second speed lower than the first speed.

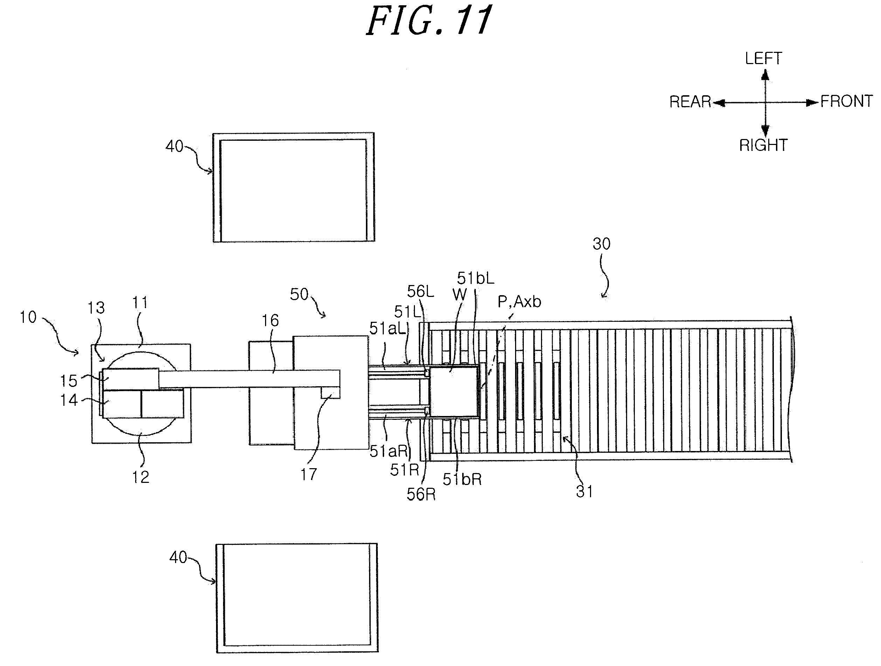

Thus, as shown in Fig. 11, the claw members 51L and 51R are driven toward each other at the second speed and are moved to the second positions. The value of the command torque Tr is increased when the claw members 51L and 51R are moved toward the second positions and the side plates 51bL and 51bR make contact with one width direction side surface and the other width direction side surface of the cardboard box W positioned in the holding position. Thereafter, if the claw members 51L and 51R are further moved toward the second positions and if the side plates 51bL and 51bR are pressed against one width direction side surface and the other width direction side surface of the cardboard box W positioned in the holding position, the value of the command torque Tr reaches a torque limiting value.

Then, torque limiting operations are actually performed by the torque limiting units 223 of the motor control devices 22g and 22h. As a consequence, the movement of the claw members 51L and 51R toward the second positions are stopped in the second positions and the claw members 51L and 51R are kept in the second positions, whereby the cardboard box W is placed on the bottom plates 51aL and 51aR and interposed between the side plates 51bL and 51bR.

When the claw members 51L and 51R is moved to the second positions in order to hold the cardboard box W, the motor control device 22i performs position control on the servo motor SM9 based on the position commands Pr supplied from the upper control device 21, so that the pushers 56L and 56R can move to the positions where the tip end portions of the pushers 56L and 56R are positioned in the other depth direction end portion (the rear end portion in Fig. 11) of the cardboard box W.

As a result, when the claw members 51L and 51R hold the cardboard box W, the pushers 56L and 56R move to the positions where the tip end portions of the pushers 56L and 56R are positioned in the other depth direction end portion of the cardboard box W. Thus, the cardboard box W is reliably supported by the tip end portions of the pushers 56L and 56R.

If the cardboard box W is held by the claw members 51L and 51R, the motor control devices 22a to 22f perform position control on the servo motors SM1 to SM6 based on the position commands Pr supplied from the upper control device 21, so that the hand 50 can make translation movement (the movement with no change in the orientation of the hand 50) toward a second designated position.

The second designated position refers to a position where a rotation axis Axb (a second rotation axis), which is positioned closer to the cardboard box W than the rotation axis Ax6 (see Fig. 2) and kept substantially parallel to the rotation axis Ax6, is located in a predetermined position existing more rearward than the holding position of the cardboard box W.

In the present embodiment, the position of the rotation axis Axb is set to a position substantially coinciding with the position of the control point P. Alternatively, the position of the rotation axis Axb may be decided to become a position other than the position substantially coinciding with the position of the control point P.

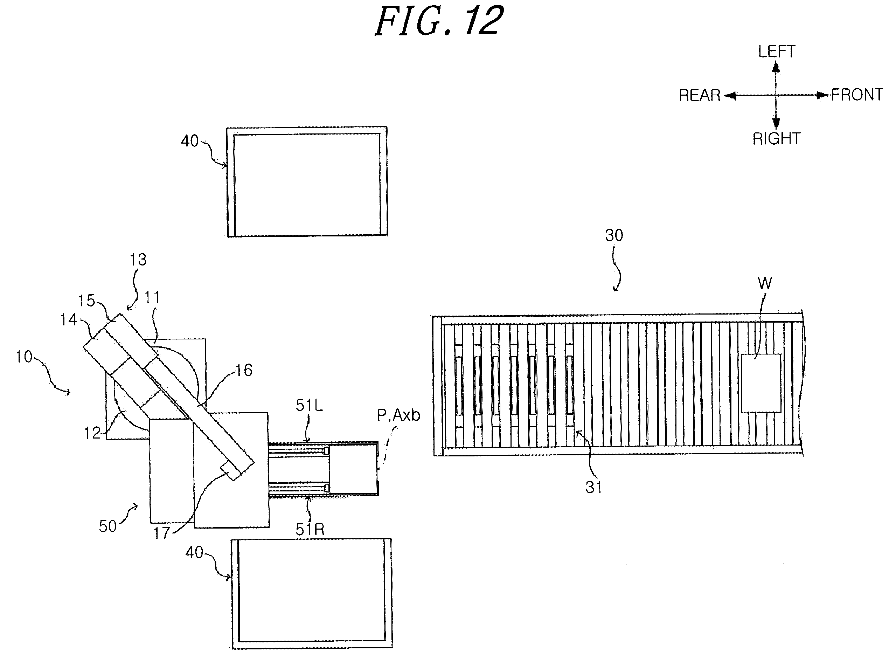

As the above, the rotator 12 and the first to fifth structures 14 to 18 of the arm 13 are appropriately driven, and the robot 10 translates the hand 50 to the second designated position as shown in Fig. 12.

If the hand 50 is moved to the second designated position, the motor control devices 22a to 22f perform position control on the servo motors SM1 to SM6 based on the position commands Pr supplied from the upper control device 21, so that the hand 50 can rotate about the rotation axis Axb and the tip ends of the claw members 51L and 51R can be oriented in a direction in which the hand 50 can gain access to the cargo 40 having a designated placing position (the right cargo 40 in the illustrated example).

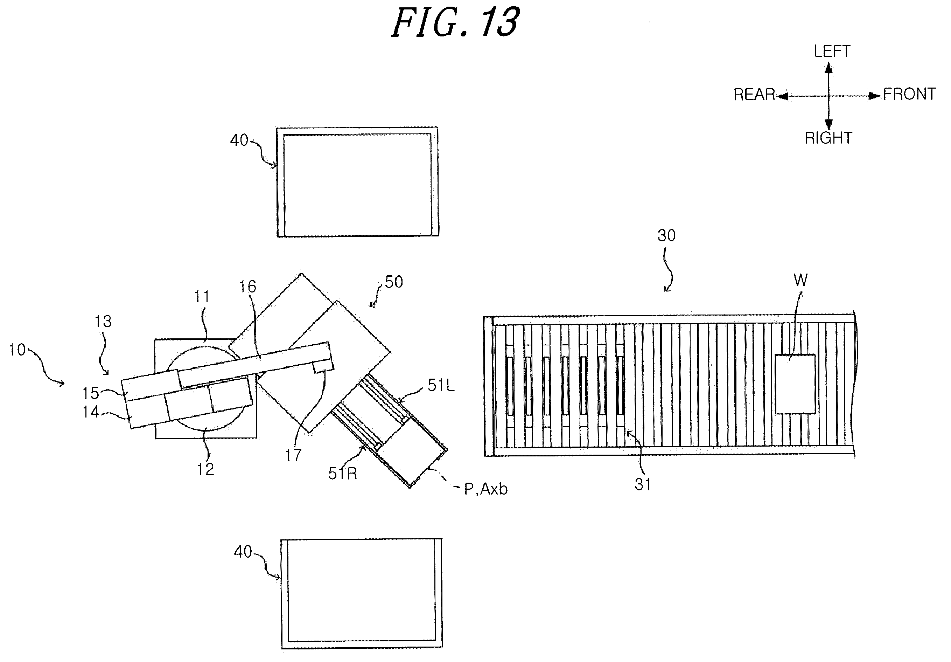

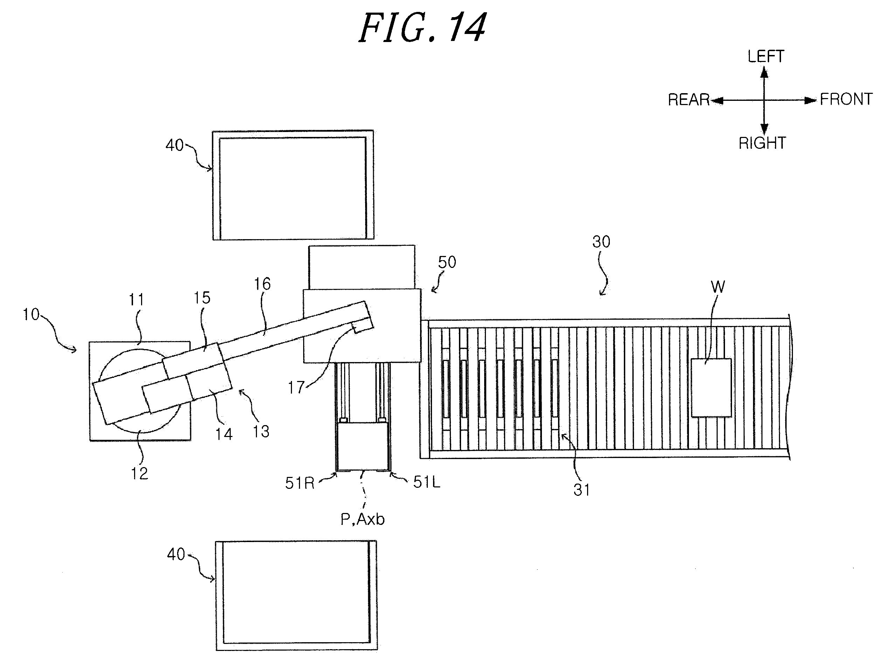

Accordingly, the rotator 12 and the first to fifth structures 14 to 18 of the arm 13 are appropriately driven, and the robot 10 rotates the hand 50 about the rotation axis Axb, causing the tip ends of the claw members 51L and 51R to face rightward as shown in Figs. 13 and 14.

If the tip ends of the claw members 51L and 51R face rightward, the motor control devices 22a to 22f perform position control on the servo motors SM1 to SM6 based on the position commands Pr supplied from the upper control device 21, so that the hand 50 can move to a third designated position.

The third designated position refers to a position where the cardboard box W held by the claw members 51L and 51R is placed in the placing position.

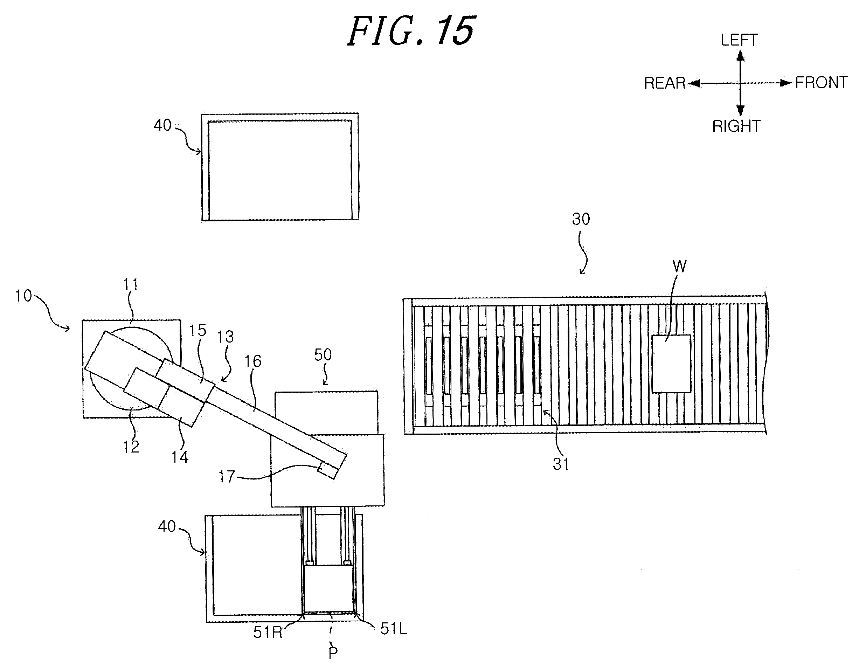

As the above, the rotator 12 and the first to fifth structures 14 to 18 of the arm 13 are appropriately driven, and the robot 10 drives the hand 50 rightward and moves the hand 50 to the third designated position, thereby bringing the claw members 51L and 51R into the cargo 40 existing at the right rear side of the holding position as shown in Fig. 15.

If the hand 50 is moved to the third designated position, the function validity processing units 224 of the motor control devices 22g and 22h make invalid the torque limiting function being performed by the torque limiting units 223. As a result, the torque limiting units 223 stop the torque limiting operations.

Concurrently, the position control units of the motor control devices 22g and 22h perform position control on the servo motors SM7 and SM8 based on the position commands Pr supplied from the upper control device 21, so that one of the claw members 51L and 51R (the claw member 51L in the illustrated example) can be kept stationary and the other (the claw member 51R in the illustrated example) can move away from the hand width direction center. Alternatively, the position control units 221 of the motor control devices 22g and 22h may perform position control on the servo motors SM7 and SM8 so that the claw member 51R can be kept stationary and the claw member 51L can move away from the hand width direction center.

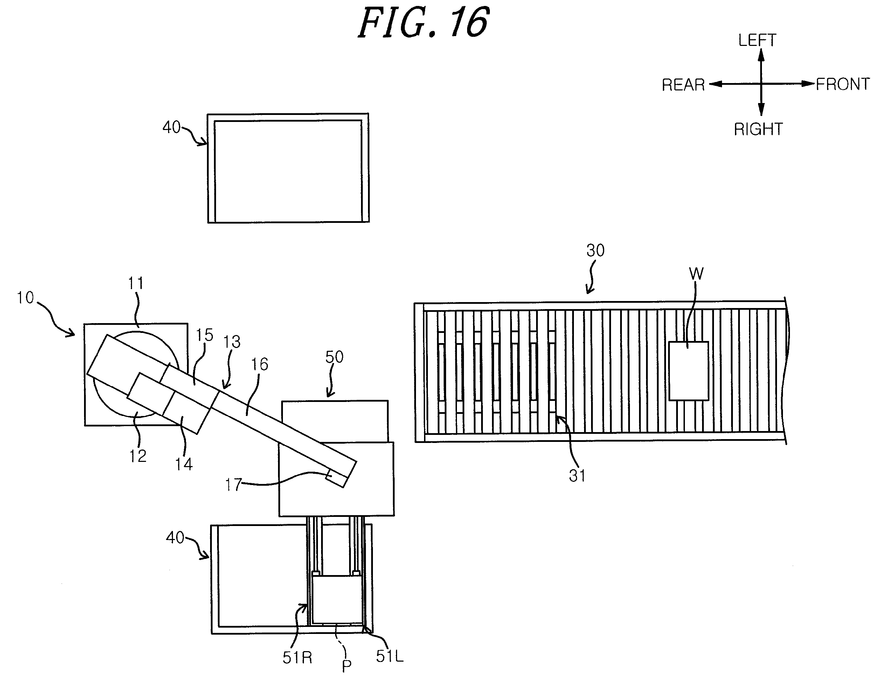

Thus, the claw member 51L is kept stationary and the claw member 51R is moved away from the hand width direction center (rearward in Fig. 16), whereby the claw members 51L and 51R release the cardboard box W.

Thereafter, the motor control devices 22a to 22f perform position control on the servo motors SM1 to SM6 based on the position commands Pr supplied from the upper control device 21, so that the hand 50 can move leftward.

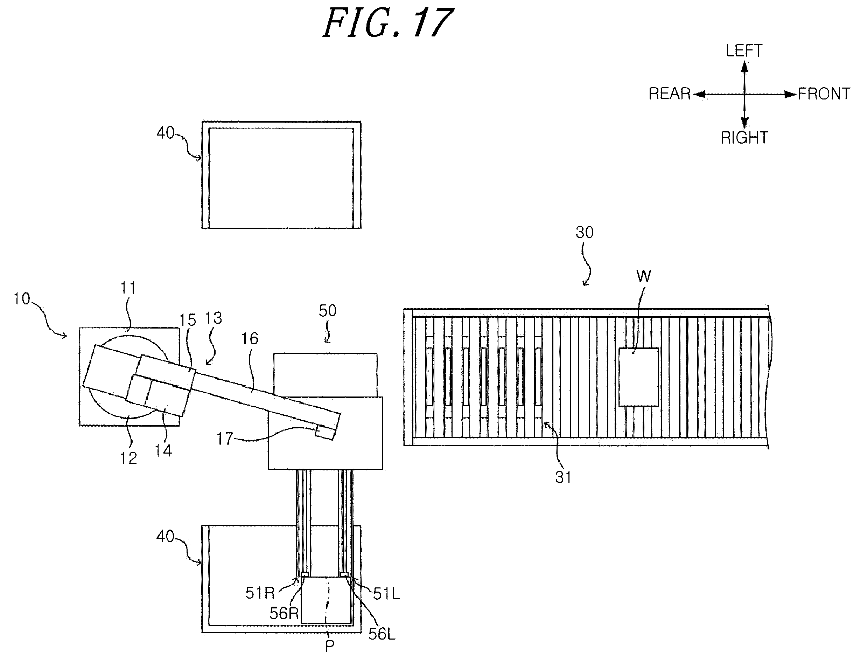

As a result, the rotator 12 and the first to fifth structures 14 to 18 of the arm 13 are appropriately driven, and the robot 10 moves the hand 50 leftward, thereby withdrawing the claw members 51L and 51R from the cardboard box W as shown in Fig. 17.

When the claw members 51L and 51R are withdrawn from the cardboard box W, the motor control device 22i performs position control on the servo motor SM9 based on the position command Pr supplied from the upper control device 21, so that the pushers 56L and 56R can move to one side in the hand depth direction so as to assume a position where the tip end portions of the pushers 56L and 56R are located in the other depth direction end portion (the left end portion in Fig. 17) of the cardboard box W.

As a result, when the claw members 51L and 51R are pulled out from the cardboard box W, the pushers 56L and 56R are moved to one side in the hand depth direction so as to assume a position where the tip end portions of the pushers 56L and 56R are located in the other depth direction end portion of the cardboard box W. Thus, the cardboard box W released from the claw members 51L and 51R is supported by the tip end portions of the pushers 56L and 56R. Then, the cardboard box W is placed in the placing position. Thereafter, the operations set forth above are repeated.

As described above, in the present embodiment, the claw members 51L and 51R of the hand 50 hold and release the cardboard box W, thereby performing a palletizing operation. Further, the upper control device 21 has the acquisition unit 211 to acquire the dimension information of the cardboard box W. The motor control devices 22g and 22h have the position control units 221 and perform position control on the servo motors SM7 and SM8 so that the claw members 51L and 51R move to the first positions and then to the second positions pursuant to the dimension information. If the claw members 51L and 51R are moved to the first positions, the torque limiting units 223 begin to perform the torque limiting operations.

Since the position control is performed pursuant to the dimension information of the cardboard box W in this manner, it is possible to deal with cardboard boxes W having different dimensions. Further, as the torque limiting operations are performed in the course of holding the cardboard box W, it is possible to pinch and hold the cardboard box W with an accurately controlled force of suitable level. Accordingly, even if the robot 10 and the hand 50 are operated at a relatively high speed, it is possible perform a high-quality palletizing work without applying any overload to the cardboard box W. As a result, it becomes possible to perform a high-speed palletizing work while reducing the load applied to the cardboard box W.

In the present embodiment, particularly, the motor control devices 22g and 22h have the speed control units 222 to control the claw members 51L and 51R so that the speed at which the claw members 51L and 51R move to the first positions can be higher than the speed at which the claw members 51L and 51R move from the first positions to the second positions. Thus, the claw members 51L and 51R move at a high speed prior to making contact with the cardboard box W and then move at a low speed, thereby holding the cardboard box W. It is therefore possible to prevent an overload from being applied to the cardboard box W by contact while shortening the tact time.

In general, cardboard boxes W have flexibility and differ in dimension and content from one another. The gravity center of a cardboard box W is not necessarily positioned at the center thereof but may be positioned in a lopsided position. In this case, according to a configuration in which a cardboard box W is gripped from above by a pair of claw members, there is likelihood that a holding force is weakened due to the deformation of the cardboard box W and that the cardboard box W is dropped due to the shake thereof caused by the lopsided gravity center.

In contrast, according to the present embodiment, the claw members 51L and 51R are provided with the bottom plates 51aL and 51aR and the side plates 51bL and 51bR. The cardboard box W is placed on the bottom plates 51aL and 51aR and is pinched and held by the side plates 51bL and 51bR. Thus, the claw members 51L and 51R can hold the cardboard box W while supporting the bottom portion and side portions of the cardboard box W. This makes it possible to stably hold a flexible cardboard box W having a lopsided gravity center.

In the present embodiment, particularly, the claw members 51L and 51R include the taper portions TL and TR formed on the lower surfaces 510L and 510R of the tip end portions of the bottom plate portions 51aL and 51aR at the opposite side from the upper surfaces 511L and 511R on which a cardboard box W is placed. This makes it possible to form the tip end portions of the bottom plates 51aL and 51aR into a sharp shape. It is therefore possible to smoothly perform insertion and removal of the claw members 51L and 51R into and from the cargo 40 during the course of placing the cardboard box W.

In the present embodiment, particularly, it is possible to obtain the following effects. If both of the claw members 51L and 51R are moved to release the cardboard box W, clearances are generated at the opposite sides of the cardboard box W. Thus, it becomes impossible to place cardboard boxes W close together. In contrast, according to the present embodiment, the motor control devices 22g and 22h have the position control units 221 to perform position control on the servo motors SM7 and SM8 so that, when releasing the cardboard box W, the claw member 51L can be kept stationary and the claw member 51R can be moved. Accordingly, it is possible to closely place cardboard boxes W one after another from one side in the hand width direction while positioning the cardboard boxes W with the claw member 51L kept stationary. This makes it possible to prevent generation of clearances between the cardboard boxes W.

In the present embodiment, particularly, the cardboard box W is placed on, and held by, the bottom plates 51aL and 51aR of the claw members 51L and 51R. In this case, when the claw members 51L and 51R are withdrawn from the cardboard box W after transferring the cardboard box W to the placing position and releasing the cardboard box W in the placing position, the cardboard box W may be moved out of the placing position due to the friction of the cardboard box W with the claw members 51L and 51R.

In the present embodiment, the hand 50 is provided with the pushers 56L and 56R capable of relatively moving the cardboard box W placed on the bottom plates 51aL and 51aR with respect to the claw members 51L and 51R. Moreover, the upper control device 21 has the acquisition unit 211 to acquire the placing position information of the cardboard box W. The motor control device 22i has the position control unit 221 to perform position control on the servo motor SM9 so that the cardboard box W is positioned in the placing position. Accordingly, it becomes possible to prevent the cardboard box W from being moved when the claw members 51L and 51R are withdrawn from the cardboard box W. It is therefore possible to accurately position the cardboard box W in the placing position.

In the present embodiment, particularly, the cardboard box W conveyed to the holding position by the conveyor 30 is held by the claw members 51L and 51R. Then, the cardboard box W is transferred to the cargo 40 and is released. The cargo 40 has a structure to which the claw members 51L and 51R are accessible in the direction perpendicular to the conveyance direction. When performing a palletizing operation with respect to the cargo 40, the robot 10 places the cardboard box W on the bottom plates 51aL and 51aR of the claw members 51L and 51R and pulls out the claw members 51L and 51R from the cardboard box W while keeping the cardboard box W in the placing position through the use of the pushers 56L and 56R. In this regard, since the cargo 40 has a structure to which the claw members are accessible in the direction perpendicular to the conveyance direction, it is possible to enhance the work efficiency.

In the present embodiment, particularly, the lift device 31 of the conveyor 30 stops the cardboard box W in the holding position and lifts up the cardboard box W. This makes it easy for the claw members 51L and 51R to perform a holding operation. It is therefore possible to enhance the work efficiency.

In the present embodiment, the hand 50 holds the cardboard box W in the offset position vertically offset with respect to the rotation axis Ax6. When moving the hand 50 to the third designated position, the motor control devices 22a to 22f control the servo motors SM1 to SM6 so that the hand 50 rotates about the rotation axis Axb positioned closer to the center of the cardboard box W than the rotation axis Ax6 and substantially parallel to the rotation axis Ax6.

Thus, as compared with a case where the cardboard box W is rotated about the rotation axis Ax6, it is possible to shorten the distance from the rotation center to the gravity center of the cardboard box W. This makes it possible to reduce the centrifugal force acting on the cardboard box W. Accordingly, it becomes possible to prevent an overload from being applied to the cardboard box W. As a result of the reduction of the centrifugal force acting on the cardboard box W, there is no need to strongly hold the cardboard box W. This also makes it possible to prevent an overload from being applied to the cardboard box W. Moreover, as a result of the reduction of the centrifugal force, it is possible to transfer the cardboard box W at a higher speed. Accordingly, it becomes possible to perform a high-speed palletizing operation while reducing the load applied to the cardboard box W.

In the present embodiment, particularly, the motor control devices 22a to 22f control the servo motors SM1 to SM6 so that the hand 50 rotates about the rotation axis Axb positioned in the middle between the tip ends of the claw members 51L and 51R. This makes it possible to significantly shorten the distance from the rotation center to the gravity center of the cardboard box W and to further reduce the centrifugal force. Since the hand 50 rotates about the tip end side of the claw members 51L and 51R, the centrifugal force acting on the cardboard box W is not oriented toward the tip end side but toward the opposite side. Accordingly, it is possible to reliably prevent an overload from being applied to the cardboard box W. In addition, the position control of the hand 50 is performed using the tip end of the hand 50 (the tip ends of the claw members 51L and 51R) as the control point P. Since the rotation center coincides with the control point P, it becomes easy to perform the control operation.

In the present embodiment, particularly, the motor control devices 22a to 22f control the servo motors SM1 to SM6 so that the rotation axis Axb move to a predetermined position while translating the hand 50. Therefore, even if the movement space of the robot 10 is narrow and even if it is difficult to secure a rotation space within which the hand is rotated about the rotation axis Axb, the rotation space can be secured by translating the hand 50 with no change in the orientation thereof and eventually moving the rotation axis Axb to the predetermined position. Accordingly, it is possible to minimize the movement space required in rotating the hand 50.

In the present embodiment, particularly, the cargos 40 are arranged in such a positional relationship with respect to the holding position that requires the rotating operation of the hand 50. With this arrangement, a centrifugal force acts on the cardboard box W when the cardboard box W is transferred from the holding position to each of the cargos 40. It is therefore possible to make remarkable the effect of reducing the centrifugal force and preventing an overload from being applied to the cardboard box W.

In the present embodiment, particularly, the claw members 51L and 51R of the hand 50 for holding the cardboard box W are longer than the depth of the cargos 40. Accordingly, the claw members 51L and 51R can reach the innermost position of each of the cargos 40 and can place the cardboard box W with no gap. Since the claw members 51L and 51R are made longer as mentioned above, the centrifugal force acting on the cardboard box W tends to become larger. In this regard, since the rotation center is moved to the cardboard box W when moving the hand 50 to the third designated position, it is possible to make remarkable the effect of reducing the centrifugal force and preventing an overload from being applied to the cardboard box W.

### <Modified Examples>

The present disclosure is not limited to the aforementioned embodiment but may be modified in many different forms without departing from the spirit and technical concept of the present disclosure. Modified examples will now be described one after another.

### (1) A Modified Example

In the aforementioned embodiment, the position of the rotation axis Axb serving as the rotation center of the hand 50 is set to exist in the middle between the tip ends of the claw members 51L and 51R. However, the position of the rotation axis Axb is not limited thereto. The position of the rotation axis Axb may be set depending on the dimensions of the cardboard box W.

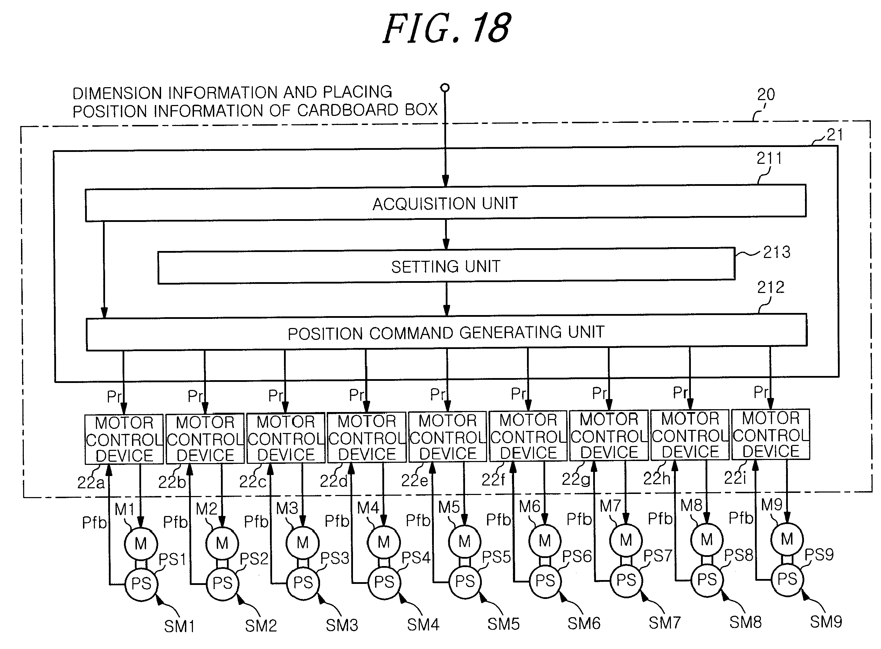

As shown in Fig. 18, the upper control device 21 of the controller 20 in accordance with the present modified example further includes a setting unit 213.

The acquisition unit 211 is similar to that of the aforementioned embodiment.

The setting unit 213 sets the position of the aforementioned rotation axis Axb based on the dimension information and/or the placing position information of the cardboard box W acquired by the acquisition unit 211. More specifically, the setting unit 213 sets the position of the rotation axis Axb to coincide with the center position of the cardboard box W. Alternatively, the setting unit 213 may set the position of the rotation axis Axb to coincide with a position other than the center position of the cardboard box W.

The position command generating unit 212 generates position commands Pr relating to the respective motors M1 to M9, based on the dimension information and the placing position information of the cardboard box W acquired by the acquisition unit 211 and the information of the position of the rotation axis Axb set by the setting unit 213. The position commands Pr relating to the motors M1 to M9 thus generated are outputted to the corresponding motor control devices 22a to 22i, thereby controlling the rotational positions of the corresponding motors M1 to M9.

Other configurations of the robot system 1 than described above are the same as those of the aforementioned embodiment and, therefore, will not be described.

While not specifically shown in Fig. 18, according to the present modified example, if the hand 50 is moved to the second designated position as mentioned above, the motor control devices 22a to 22f perform position control on the servo motors SM1 to SM6 based on the position commands Pr supplied from the upper control device 21, so that the hand 50 can be translated to a predetermined position and then can be rotated about the rotation axis Axb set in the center position of the cardboard box W and so that the tip ends of the claw members 51L and 51R can be oriented in the direction in which the claw members 51L and 51R can access to the cargo 40 having a designated placing position.

Accordingly, the rotator 12 and the first to fifth structures 14 to 18 of the arm 13 are appropriately driven. As a result, the robot 10 rotates the hand 50 about the rotation axis Axb set in the center position of the cardboard box W, causing the tip ends of the claw members 51L and 51R to be oriented in the direction in which the claw members 51L and 51R can access to the cargo 40 having a designated placing position.

According to the present modified example, it is possible to obtain the same effects as obtained in the aforementioned embodiment. In the present modified example, the upper control device 21 causes the setting unit 213 to set the position of the rotation axis Axb to coincide with the center position of the cardboard box W, based on the dimension information of the cardboard box W. Thus, the rotation axis Axb can be set in a suitable position even if cardboard boxes W have different dimensions. It is therefore possible to further enhance the effect of preventing an overload from being applied to the cardboard box W.

### (2) Other Modified Examples

In the aforementioned embodiment, a pair of claw members 51L and 51R is independently moved by the servo motors SM7 and SM8. However, the present disclosure is not limited thereto. The claw members 51L and 51R may be moved by a single servo motor.

In the aforementioned embodiment, two pushers 56L and 56R are moved by one servo motor SM9. However, the present disclosure is not limited thereto. Two pushers 56L and 56R may be independently moved by different servo motors.

In the aforementioned embodiment, the robot 10 holds the cardboard box W. However, the present disclosure is not limited thereto. The robot 10 may hold a workpiece other than the cardboard box W.

In the aforementioned embodiment, the workpiece (the cardboard box W in the aforementioned example) is pinched and held by a pair of claw members 51L and 51R provided in the hand 50. However, the number, shape, configuration and holding manner of the claw members provided in the hand 50 are not particularly limited. Moreover, the hand 50 may be provided with a configuration other than the claw members (e.g., a suction device) and the workpiece may be held thereby.

In the aforementioned embodiment, the robot 10 places the workpiece (the cardboard box W in the aforementioned example) on the cargo 40. However, the present disclosure is not limited thereto. The robot 10 may place the workpiece on a transport container other than the cargo. In addition, the robot 10 may place the workpiece on a place other than the transport container (e.g., a conveyor or a floor surface).

In the aforementioned embodiment, the workpiece (the cardboard box W in the aforementioned example) is conveyed to the holding position by the conveyor 30. However, the present disclosure is not limited thereto. The workpiece may be placed in the holding position in advance.

In the aforementioned embodiment, the robot 10 is formed of a robot having six joints. However, the present disclosure is not limited thereto. The robot 10 may be formed of a robot having five or less joints or a robot having seven or more joints. In the aforementioned embodiment, the robot 10 is formed of a so-called single-arm robot. However, the present disclosure is not limited thereto. The robot 10 may be formed of a multi-arm robot.

In addition to the above description, the embodiment and the modified examples described above may be appropriately combined.

It should be understood by those skilled in the art that various modifications, combinations, sub-combinations and alterations may occur depending on design requirements and other factors insofar as they are within the scope of the appended claims or the equivalents thereof.

## Claims

1. A robot system, comprising:
a robot having a plurality of joints;
a plurality of actuators configured to drive the plurality of joints, respectively;
a hand provided at a tip end of the robot, the hand being rotatable about a first rotation axis by one of the actuators and configured to hold a workpiece in a position vertically offset with respect to the first rotation axis; and
a controller configured to control the plurality of actuators such that the hand rotates about a second rotation axis positioned closer to the workpiece than the first rotation axis and parallel to the first rotation axis.

2. The robot system of claim 1, wherein the hand includes a holding member configured to hold the workpiece by extending along a plane substantially perpendicular to the first rotation axis, and wherein the controller is configured to control the plurality of actuators such that the hand rotates about the second rotation axis positioned at a tip end of the holding member.

3. The robot system of claim 2, wherein the controller is configured to control the plurality of actuators such that the second rotation axis is moved to a predetermined position by translating the hand.

4. The robot system of claim 2 or 3, wherein the controller includes an acquisition unit configured to acquire dimension information of the workpiece and a setting unit configured to set a position of the second rotation axis based on the dimension information.

5. The robot system of any one of claims 2 to 4, further comprising:
a conveyor configured to convey the workpiece to a holding position where the workpiece is held by the hand; and
a transport container on which the workpiece released from the hand is placed, the transport container being arranged in such a positional relationship with respect to the holding position that requires a rotational operation of the hand.

6. The robot system of claim 5, wherein the transport container is configured such that the hand gains access to the transport container in a direction perpendicular to a conveyance direction in which the workpiece is conveyed by the conveyor, and the holding member is extendible longer than the depth of the transport container along a plane substantially perpendicular to the first rotation axis.

7. The robot system of claim 4, wherein the holding member includes a plurality of claw members movably installed in the hand and configured to hold and release the workpiece, and the robot system further comprises: at least one servo motor configured to move the claw members, the controller further including a position control unit configured to perform position control on the servo motor such that the claw members move to first positions and then to second positions pursuant to the dimension information of the workpiece and a torque limiting unit configured to limit a torque command relating to the servo motor to a predetermined torque or less after the claw members are moved to the first positions.

8. The robot system of claim 7, wherein the controller further includes a speed control unit configured to control the claw members so that the speed at which the claw members move to the first positions becomes higher than the speed at which the claw members move from the first positions to the second positions.

9. The robot system of claim 7 or 8, wherein each of the claw members includes a bottom plate and a side plate formed at a predetermined angle with respect to the bottom plate, the claw members being arranged in one pair so that the side plates of the claw members face each other, the workpiece being placed on the bottom plates of the claw members and pinched and held by the side plates of the claw members.

10. The robot system of any one of claims 7 to 9, further comprising:
at least one pusher provided in the hand and configured to relatively move the workpiece placed on the bottom plates with respect to the claw members; and
at least one additional servo motor configured to drive the pusher,
wherein the acquisition unit is configured to acquire information on a placing position of the workpiece, the position control unit configured to perform position control on the additional servo motor so that, when releasing the workpiece and withdrawing the claw members from the workpiece, the pusher keeps the workpiece in the placing position.
